# EUROPEAN PATENT APPLICATION

(11) **EP 1 666 329 A2**
(43) Date of publication of application: **07.06.2006**
(21) Application number: 05077708.5
(22) Date of filing: 29.11.2005
(51) Int. Cl.: B62B 1/00, B62B 1/14, B62B 1/26

(54) **Transporter for doors and panels**

(30) Priority: 03.12.2004 NL 1027650
(71) Applicant: Luttikhold, Leonardus Antonius Maria, 7156 SH Beltrum (NL)
(72) Inventor: Luttikhold, Leonardus Antonius Maria, 7156 SH Beltrum (NL)

(57) **Abstract**

The invention relates to a handtruck for transporting doors. The handtruck consists of a frame (1) onto which two wheels (2a,2b) and a load platform (3) are connected. Moreover, two clamping devices (9a,9b) are connected to the frame (1), with which a door (13) may be clamped in such a way that it is positioned perpendicular to the frame (1) and perpendicular to the load platform (3). In this position it may then easily be transported.

## Description

The invention relates to a transporter for transporting doors and panels. On a building site, doors and panels often must be transported over a relatively large distance, for example from a store to the location where the door must be mounted. The door may be carried by two persons, or it may be moved with the aid of a cart. The first solution is relatively expensive, as always two men must be put in. The second solution brings along the risk that the door or the building into which the door must be mounted is damaged, because a cart with a door placed onto it is difficult to move. Moreover, the door must be fixed onto the cart, in order not to damage it by the cart itself.

The invention substantially obviates this disadvantage and is characterised in that the transporter is a handtruck, provided with a frame onto which two wheels and a load platform are mounted and with means of attachment for securing the door or panel onto the handtruck. It is known that a handtruck of this kind may be moved easily by one person, while the weight is mainly carried by the handtruck. In this respect, the inventive transporter meets the requirements of modern labour legislation, according to which lifting and transporting heavy goods is permitted only in a limited number of situations.

A favourable embodiment of the inventive transporter is characterised in that the means of attachment comprise two clamping devices, with which the door or panel may be clamped, in such a way that this door or this panel may be transported substantially perpendicular to the frame and substantially perpendicular to the load platform. A door or panel mounted in this way does not project sidewards outside the handtruck, which means that the chance of damaging the door or the panel or for example walls or door frames is very small. Moreover, a clamped joint usually may be installed quickly, without the risk of a surface of the door thereby being damaged.

A further favourable embodiment of the inventive transporter is characterised in that the frame is constructed telescopically and comprises a first profile, located centrally between the wheels, onto which a second profile is slidably mounted. In this way, the transporter may easily be adapted to the dimensions of for example panels to be transported.

A further favourable embodiment of the inventive transporter is characterised in that the clamping devices comprise two gluing clamps. Gluing clamps are perfectly well suited for clamping doors and panels. Moreover, the user aimed at can handle them very well and they are cheap, which means that the transporter may be manufactured for an attractive price.

A favourable embodiment is according to another aspect of the invention characterised in that a first gluing clamp is connected to the first profile and a second gluing clamp is connected to the second profile. If the telescopic frame is pulled out because for example large panels must be transported, the second gluing clamp will move along too, which means that the panel will always be clamped near a corner, which adds to the stability of the transporter.

A further favourable embodiment of the inventive transporter is characterised in that the frame is provided with a stop mechanism for arresting the second profile with respect to the first profile, such that the length of the frame may easily be adjusted.

A favourable embodiment is according to another aspect of the invention characterised in that the frame is provided with one or two additional wheels, mounted onto the second profile. It is possible then to move the transporter on four wheels, for example if a low-ceilinged passage must be passed. Preferably, the one or two additional wheels are swivelling wheels, so that the transporter will remain controllable.

A further favourable embodiment of the inventive transporter is characterised in that the one or two additional wheels are provided with a break. One may place the transporter on four wheels then and apply the breaks, after which the transporter may be used as a workbench, for example when the hinge-halves are mounted on a door.

Finally, the inventive transporter may also be used advantageously for taking a door off its hinges. While doing so, the load platform is moved underneath a door, in such a way the door is enclosed by the gluing clamps which have not yet been fastened, after which a simple canting movement takes the door out of the hinges. Also for mounting the door the transporter may be used advantageously in a similar manner.

The invention will now be further explained with a reference to the following figures, in which:
- Fig. 1: shows a possible embodiment of a transporter according to the invention in side view;
- Fig. 2: shows this embodiment in front view;
- Fig. 3: shows this embodiment during transportation;
- Fig. 4: shows this embodiment while the hinge-halves are being mounted.

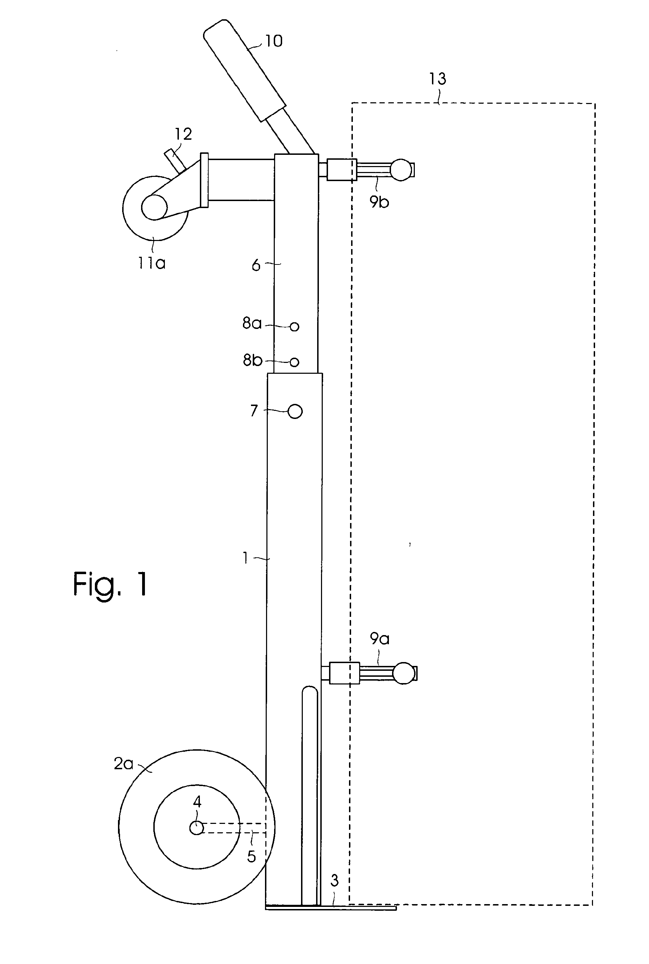

Fig. 1 shows a possible embodiment of a transporter according to the invention in side view, consisting of a single tube 1 which forms the frame of a handtruck, as well as two wheels 2a,2b, of which only wheel 2a is visible in the figure, and a load platform 3 which is welded to the bottom side of tube 1. Wheels 2a,2b are mutually connected by a shaft 4, which shaft 4 in turn is connected to tube 1 by a plate 5. A tube 6 is slidably inserted in tube 1, of which the height may be adjusted with the aid of a pin 7 and a row of holes 8a,8b,.. in tube 6. Gluing clamps 9a,9b, as such well known in the art, are welded onto tube 1 and tube 6. On the top side, tube 6 is provided with a grip 10, with which the transporter may easily be moved. Moreover, two swivelling wheels 11a,11b are connected to the top side of tube 6, of which only wheel 11a is visible in the figure, so that the transporter may also be placed and moved on four wheels. Swivelling wheel 11a is provided with a break 12, for parking the transporter standing on four wheels. Between gluing clamps 9a,9b a door 13 may be clamped, after which the transporter together with the door may easily be moved.

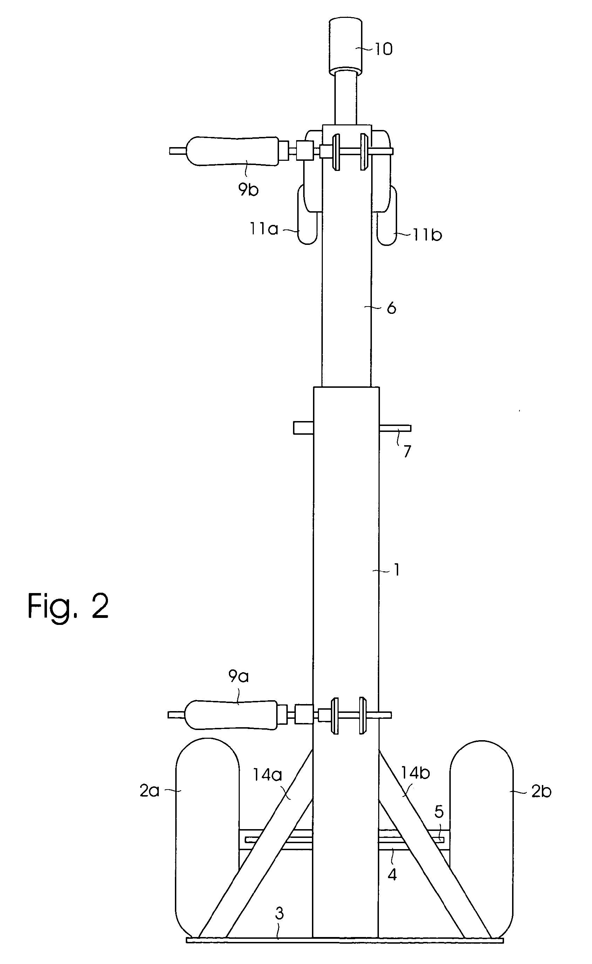

Fig. 2 shows this embodiment in front view, with tube 1 which forms the frame of a handtruck, wheels 2a,2b and load platform 3 which is welded to the bottom side of tube 1. For strength, the ends of load platform 3 are connected to tube 1 with the aid of two profiles 14a,14b. Wheels 2a,2b are connected via a shaft 4, which in turn is connected to tube 1 with the aid of plate 5. In tube 1 a tube 6 is slidably inserted, of which the height may be adjusted with the aid of a pin 7. Gluing clamps 9a,9b are welded onto respectively tube 1 and tube 6. On the top side, tube 6 is provided with grip 10 and with two swivelling wheels 11a,11b.

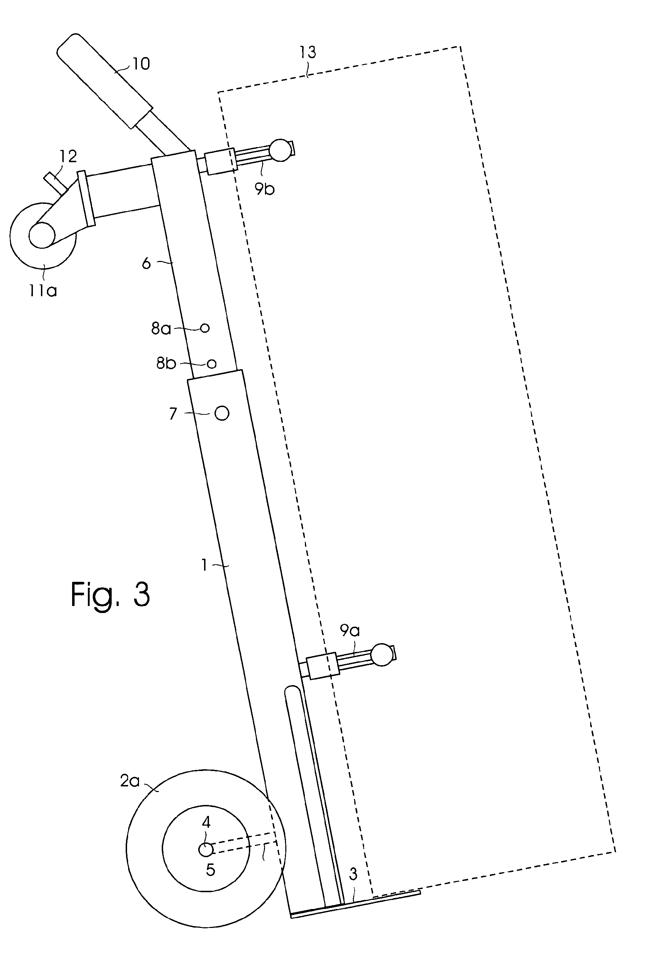

Fig. 3 shows this embodiment during transportation, in a position in which door 13 may be transported with minimal effort.

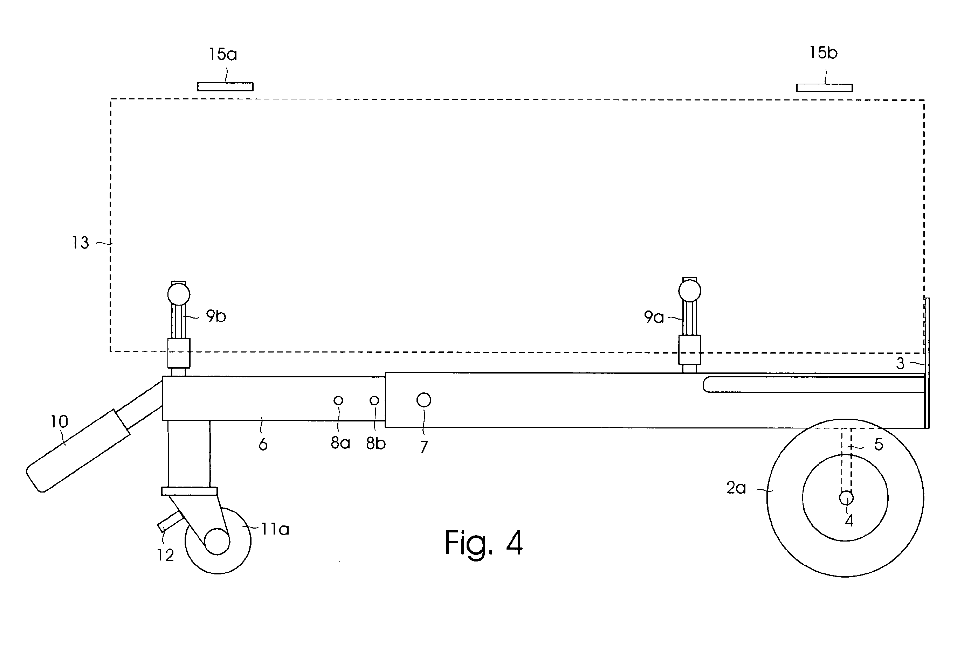

Fig. 4 shows this embodiment while the hinge-halves 15a,15b are being mounted. In this case, the transporter is placed onto wheels 2a,2b and onto wheels 11a,11b, while brake 12 is activated. In fact, the transporter now forms a workbench which substantially simplifies the mounting of hinge-halves 15a,15b. Once hinge-halves 15a, 15b and possibly other modifications have been made, door 13 is brought into the position shown in Fig. 3 and moved towards the door frame for which is was intended.

## Claims

1. Transporter for transporting doors and panels, **characterised in that** the transporter is a handtruck, provided with a frame onto which two wheels and a load platform are mounted and with means of attachment for securing the door or panel onto the handtruck.

2. Transporter according to claim 1, **characterised in that** the means of attachment comprise two clamping devices, with which the door or panel may be clamped, in such a way that this door or this panel may be transported substantially perpendicular to the frame and substantially perpendicular to the load platform.

3. Transporter according to claim 1, **characterised in that** the frame is constructed telescopically and comprises a first profile, located centrally between the wheels, onto which a second profile is slidably mounted.

4. Transporter according to claim 2, **characterised in that** the clamping devices comprise two gluing clamps.

5. Transporter according to claim 3, **characterised in that** a first gluing clamp is connected to the first profile and a second gluing clamp is connected to the second profile.

6. Transporter according to claim 1, **characterised in that** the frame is provided with a stop mechanism for arresting the second profile with respect to the first profile.

7. Transporter according to claim 2, **characterised in that** the frame is provided with one or two additional wheels, mounted onto the second profile.

8. Transporter according to claim 6, **characterised in that** the one or two additional wheels are swivelling wheels.

9. Transporter according to claim 7 or 8, **characterised in that** the one or two additional wheels are provided with a break.
